# EUROPÄISCHE PATENTANMELDUNG

(11) **EP 2 071 358 A2**
(43) Veröffentlichungstag der Anmeldung: **17.06.2009**
(21) Anmeldenummer: 08105806.7
(22) Anmeldetag: 17.11.2008
(51) Int. Cl.: G01S 17/08, G01S 17/10, G01S 17/32, G01S 7/499

(54) **Laserdistanzmesser**

(30) Priorität: 12.12.2007 DE 102007055771
(71) Anmelder: HILTI Aktiengesellschaft, 9494 Schaan (LI); JENOPTIK Laser, Optik, Systeme GmbH, 07745 Jena (DE)
(72) Erfinder: Gogolla, Torsten, 9494 Schaan (LI); Winter, Andreas, 6800 Feldkirch (AT); Seifert, Helmut, 07616 Serba (DE); Schusser, Gero, 07616 Buergel (DE)

(57) **Zusammenfassung**

Ein elektrooptischer Laserdistanzmesser (1, 1') mit einem handhabbaren Gehäuse (2), einer elektrischen Strahlquelle (3) zur Erzeugung eines gebündelten Lichtstrahls (4), einer Empfangsoptik (5) mit einem längs der Empfangsachse (E) im Brennpunkt (6) angeordneten, quer zur Empfangsachse (E) flächigen Photoempfänger (7) zum Empfang von Teilen des von einem Messobjekt (8) in einem Empfangsstrahlenbündel (9) zurückgestreuten Lichtstrahls (4), wobei der Photoempfänger (7) innerhalb des Empfangsstrahlenbündels (9) teilweise von einem Polarisationsfilter (10, 10', 10", 10''') abgeschattet ist.

## Beschreibung

Die Erfindung bezeichnet einen handhabbaren, elektrooptischen Laserdistanzmesser, vorzugsweise zur Verwendung im Bauhilfsgewerbe.

Bei im Bauhilfsgewerbe benutzten handhabbaren Laserdistanzmessern für einen messbaren Distanzbereich bis zu einigen 100m wird eine Messgenauigkeit im mm-Bereich benötigt. Dafür wird der zumeist sichtbare, gebündelte Lichtstrahl einer Laserdiode auf die Oberfläche eines Messobjektes geschickt. Das von dort zurückgestreute und / oder reflektierte Licht wird von einer Empfangsoptik auf die aktive Fläche eines Photoempfängers abgebildet. Über die Modulation des Lichts (impulsförmig, sinusförmig oder stochastisch) wird die Lichtlaufzeit zwischen dem Aussenden und dem Empfang des Lichtes ermittelt. Moderne derartige Laserdistanzmesser arbeiten mit dem sogenannten Impulsrückmischverfahren, wozu der interessierte Fachmann bezüglich Einzelheiten auf die DE10112833 verwiesen wird.

Bei obigen Laserdistanzmessern ist ein grosser nutzbarer Dynamikbereich abzudecken, denn es sollen sowohl sehr schwache, aus grossen Entfernungen und von schlechten Zielen (z.B. schwarzer Stoff) zurückgestreute Messlichtimpulse als auch sehr starke, aus dem Nahbereich und an spiegelnden Oberflächen (lackierte Flächen, Fliesen) reflektierte Messlichtimpulse detektiert werden.

Nach der DE10051302 wird bei einem Laserdistanzmesser mit einem zur Empfängerachse versetzt angeordneten Lichtsender der flächige Photoempfänger mit einer lichtundurchlässigen Blende derart abgedeckt, dass zwei getrennte lichtempfindliche Bereiche ausgebildet sind.

Nach der WO03002939 wird bei einem Laserdistanzmesser mit einem zur Empfängerachse versetzt angeordneten Lichtsender ein Teil des flächigen Photoempfängers mit einer lichtundurchlässigen Blende abgedeckt, wobei sich mit der im Nahbereich durch die Parallaxe verbundenen Verschiebung des Bildmesslichtflecks die Empfangslichtleistung des Photoempfängers verringert und dadurch der Dynamikbereich vergrössert wird.

Die Laserdiode sendet in der Regel linear polarisiertes Licht aus. Bei ideal reflektierenden Oberflächen ist das Empfangslicht ebenfalls linear polarisiert. Bei ideal streuender Oberfläche wird unpolarisiertes Licht empfangen. Teilweise reflektierende Oberflächen produzieren in Abhängigkeit von den Reflexionseigenschaften sowohl streuende, unpolarisierte Anteile als auch reflektierte, polarisierte Anteile. Bei weit entfernten Oberflächen liefern die reflektierten Anteile, welche auch bei scheinbar rein streuenden Oberflächen wie z.B. Betonwänden vorhanden sind, vorteilhafte verstärkende Messsignalbeiträge. Bei nahen Oberflächen sind die reflektierten Anteile insbesondere bei stark reflektierenden Flächen hingegen sehr störend, da sie zu einer Übersteuerung des Photoempfängers führen.

Die Aufgabe der Erfindung besteht in der Erhöhung des nutzbaren Dynamikbereiches bei handhabbaren, elektrooptischen Laserdistanzmessern.

Die Aufgabe wird im Wesentlichen durch die Merkmale des Anspruchs 1 gelöst. Vorteilhafte Weiterbildungen ergeben sich aus den Unteransprüchen.

So weist ein elektrooptischer Laserdistanzmesser ein handhabbares Gehäuse, eine elektrische Strahlquelle zur Erzeugung eines gebündelten Lichtstrahls, eine Empfangsoptik mit einem längs der Empfangsachse im Brennpunkt angeordneten, quer zur Empfangsachse flächigen Photoempfänger zum Empfang von Teilen des von einem Messobjekt in einem Empfangsstrahlenbündel zurückgestreuten Lichtstrahls auf, wobei der Photoempfänger innerhalb des Empfangsstrahlenbündels teilweise von einem Polarisationsfilter (bspw. ausgebildet als Folie, Schichtensystem oder Kristall) abgeschattet ist.

Da die Abbildungseigenschaften für nahe Messobjekte sich von denen weit entfernter Messobjekte, die längs der Empfangsachse im Brennpunkt abgebildet werden, unterscheiden, wird ein Grossteil des längs der Empfangsachse auf den Photoempfänger auftreffenden Lichtes ferner Messobjekte nicht von dem Polarisationsfilter abgeschattet. Bei nahen Messobjekten, die erst hinter dem Brennpunkt abgebildet werden, hingegen wird ein Grossteil des auf den flächigen Photoempfänger auftreffenden Lichtes bezüglich einer Polarisationsrichtung vom Polarisationsfilter abgeschattet. Nur der entsprechend der Polarisationsrichtung des Polarisationsfilters polarisierte Anteil kann passieren und den Photoempfänger erreichen. Da starke, zur Übersteuerung führende, Lichtsignale optisch unterdrückt werden, kann der Empfänger somit wesentlich empfindlicher ausgelegt werden, wodurch der nutzbare Dynamikbereich vergrössert wird. Dies führt zu einer Erhöhung der Reichweite und zur Möglichkeit, im Nahbereich auf reflektierenden Oberflächen zu messen.

Vorteilhaft ist der Polarisationsfilter parallel zur Polarisation der Strahlquelle undurchlässig, wodurch die besonders im Nahbereich intensive Reflektion an glatten Messobjekten, bei denen die Polarisation des Lichtstrahls beibehalten wird, zusätzlich unterdrückt und somit der nutzbare Dynamikbereich weiter vergrössert wird.

Vorteilhaft ist der Polarisationsfilter ausserhalb der Empfangsachse angeordnet, wodurch bei einer zur Sendeachse parallel beabstandeten Empfangsachse vom Polarisationsfilter nur das Licht naher Messobjekte bezüglich einer Polarisationsrichtung abgeschattet wird.

Vorteilhaft ist der Polarisationsfilter eine direkt an oder in einem Bauteil der Empfangsoptik angeordnete, weiter vorteilhaft auf der Empfangslinse aufgebrachte, Polarisationsschicht, wodurch diese ökonomisch einfach herstellbar ist.

Vorteilhaft ist der Polarisationsfilter direkt auf dem Photoempfänger aufgebracht, wodurch eine feste Orientierung des Polarisationsfilters zum Photoempfänger vorliegt.

Vorteilhaft weist der Photoempfänger eine Blende auf, weiter vorteilhaft ebenfalls als direkt aufgebrachte Beschichtung, wodurch zusätzlich der lichtempfindliche Empfangsflächenbereich des Photoempfängers geeignet festlegbar ist.

Alternativ vorteilhaft ist der Polarisationsfilter innerhalb der Empfangsachse zwischen der Empfangslinse und dem Brennpunkt angeordnet, wodurch bei einer zur Sendeachse koaxialen Empfangsachse vom Polarisationsfilter nur das Licht naher Messobjekte bezüglicher einer Polarisationsrichtung abgeschattet wird.

Vorteilhaft ist der Polarisationsfilter ein Polarisationsstrahlteiler, wodurch über diesen ein von der Strahlquelle ausgesendeter Lichtstrahl koaxial zur Empfangsachse einkoppelbar ist.

Die Erfindung wird bezüglich eines vorteilhaften Ausführungsbeispiels näher erläutert mit:
Fig. 1 als Laserdistanzmesser im Fernbereich
Fig. 2 als Empfangsoptik von Fig. 1 im Nahbereich
Fig. 3 als Variante des Polarisationsfilters von Fig. 2
Fig. 4 als weitere Variante des Polarisationsfilters von Fig. 2
Fig. 5 als Photoempfänger von Fig. 4 in Aufsicht
Fig. 6 als Variante der Empfangsoptik im Fernbereich
Fig. 7 als Empfangsoptik von Fig. 6 im Nahbereich

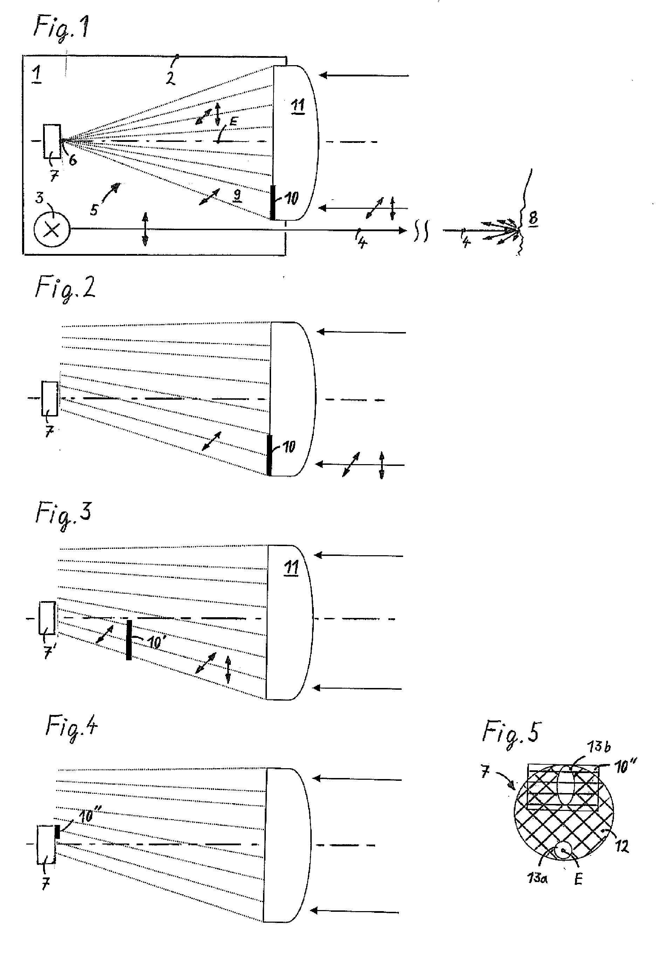

Nach Fig. 1 weist ein paraaxialer elektrooptischer Laserdistanzmesser 1 ein handhabbares Gehäuse 2, eine elektrische Strahlquelle 3 in Form einer Laserdiode zur Erzeugung eines modulierten, linear polarisierten, gebündelten und sichtbaren Lichtstrahls 4 und eine dazu parallel versetzt angeordnete Empfangsoptik 5 auf. Längs der Empfangsachse E im Brennpunkt 6 ist ein quer zur Empfangsachse E flächiger Photoempfänger 7 in Form einer Fotodiode zum Empfang von Teilen des von einem Messobjekt 8 in einem Empfangsstrahlenbündel 9 zurückgestreuten Lichtstrahls 4 angeordnet. Dabei ist der Photoempfänger 7 innerhalb des Empfangsstrahlenbündels 9 aber ausserhalb der Empfangsachse E teilweise von einem Polarisationsfilter 10 abgeschattet, der nur die senkrecht zur Polarisation der Strahlquelle 3 polarisierte Komponenten des Lichts durchlässt und somit die reflektierte (gleich polarisierte) Komponente unterdrückt. Der Polarisationsfilter 10 ist in Form eines Schichtensystems direkt auf der Empfangslinse 11 aufgebracht. Der Grossteil des auf den lichtempfindlichen Empfangsflächenbereich des Photoempfängers 7 auftreffenden Empfangsstrahlenbündels 9 des Fernbereichs passiert nicht den Polarisationsfilter 10, so dass alle Polarisationskomponenten den Photoempfänger 7 erreichen.

Nach Fig. 2 passiert das auf den lichtempfindlichen Empfangsflächenbereich des Photoempfängers 7 auftreffende Empfangsstrahlenbündel 9 des Nahbereichs zum Grossteil den Polarisationsfilter 10, so dass nur die nicht parallel zur Strahlquelle 3 (Fig. 1) polarisierten Polarisationskomponenten den Photoempfänger 7 erreichen und somit der (an gut spiegelnden Flächen) reflektierte Anteil wesentlich unterdrückt wird.

Nach Fig. 3 ist der Polarisationsfilter 10' in Form eines Kristalls zwischen der Empfangslinse 11 und dem Photoempfänger 7 angeordnet.

Nach Fig. 4 ist der Polarisationsfilter 10" in Form einer Folie direkt auf dem lichtempfindlichen Empfangsflächenbereich des Photoempfängers 7 angeordnet.

Nach Fig. 5 ist direkt auf dem Photoempfänger 7 eine lichtundurchlässige Blende 12 mit zwei Öffnungen 13a, 13b aufgebracht, die zwei voneinander getrennte, lichtempfindliche Empfangsflächenbereiche erzeugt, wobei ein erster Empfangsbereich auf der Empfangsachse E liegt und der andere zweite Empfangsbereich davon beabstandet ist. Der erste Empfangsbereich wird nur von Licht aus dem Fernbereich und der zweite Empfangsbereich wird nur von Licht aus dem Nahbereich erfasst. Nur auf dem zweiten Empfangsbereich befindet sich der Polarisationsfilter 10 in Form einer Folie.

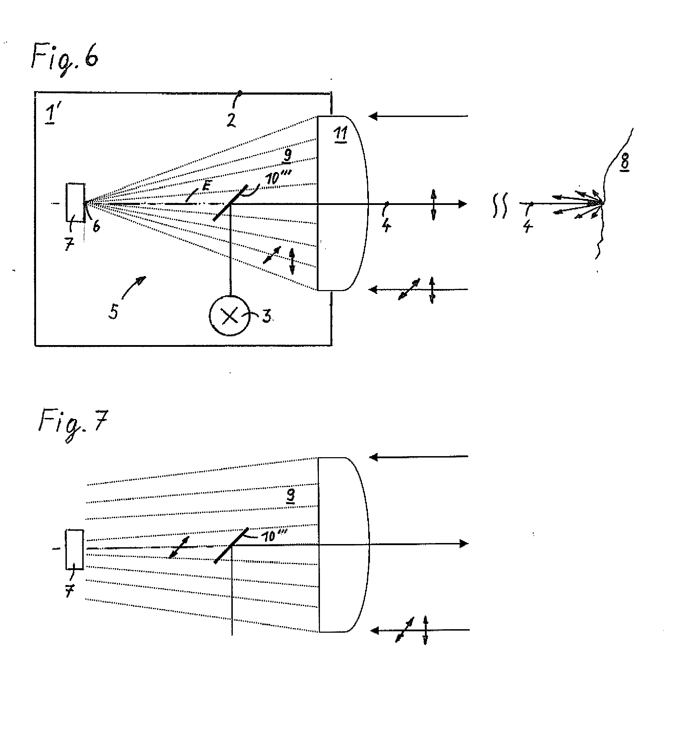

Nach Fig. 6 weist ein koaxialer elektrooptischer Laserdistanzmesser 1' ein handhabbares Gehäuse 2, eine elektrische Strahlquelle 3 in Form einer Laserdiode zur Erzeugung eines modulierten, linear polarisierten, gebündelten und sichtbaren Lichtstrahls 4, eine Empfangsoptik 5 mit einem längs der Empfangsachse E im Brennpunkt 6 angeordneten, quer zur Empfangsachse E flächigen Photoempfänger 7 in Form einer Fotodiode zum Empfang von Teilen des von einem Messobjekt 8 in einem Empfangsstrahlenbündel 9 zurückgestreuten Lichtstrahls 4 auf. Dabei ist der Photoempfänger 7 im koaxialen inneren des Empfangsstrahlenbündels 9 teilweise von einem Polarisationsfilter 10"' abgeschattet, der nur die senkrecht zur Polarisation der Strahlquelle 3 polarisierte Komponenten des Lichts durchlässt und somit die reflektierte (gleich polarisierte) Komponente unterdrückt. Der Polarisationsfilter 10"' in Form eines Polarisationsstrahlteilers ist axial zwischen dem Brennpunkt 6 und der Empfangslinse 11 angeordnet und spiegelt den von der quer zur Empfangsachse E orientierten Strahlquelle 3 erzeugten Lichtstrahl 4 koaxial in die Empfangsachse E ein.

Nach Fig. 7 passiert hingegen das auf den lichtempfindlichen Empfangsflächenbereich des Photoempfängers 7 auftreffende Empfangsstrahlenbündel 9 des Nahbereichs, welches erst hinter dem Brennpunkt 6 fokussiert wird, zum Grossteil den Polarisationsfilter 10"', so dass nur die nicht parallel zur Strahlquelle 3 (Fig. 6) polarisierten Polarisationskomponenten den Photoempfänger 7 erreichen und somit der (an gut spiegelnden Flächen) reflektierte Anteil wesentlich unterdrückt wird.

## Patentansprüche

1. Elektrooptischer Laserdistanzmesser mit einem handhabbaren Gehäuse (2), einer elektrischen Strahlquelle (3) zur Erzeugung eines gebündelten Lichtstrahls (4), einer Empfangsoptik (5) mit einem längs der Empfangsachse (E) im Brennpunkt (6) angeordneten, quer zur Empfangsachse (E) flächigen Photoempfänger (7) zum Empfang von Teilen des von einem Messobjekt (8) in einem Empfangsstrahlenbündel (9) zurückgestreuten Lichtstrahls (4), **dadurch gekennzeichnet, dass** der Photoempfänger (7) innerhalb des Empfangsstrahlenbündels (9) teilweise von einem Polarisationsfilter (10, 10', 10", 10"') abgeschattet ist.

2. Laserdistanzmesser nach Anspruch 1, **dadurch gekennzeichnet, dass** der Polarisationsfilter (10, 10', 10", 10"') parallel zur Polarisation der Strahlquelle (5) undurchlässig ist.

3. Laserdistanzmesser nach Anspruch 1 oder 2, **dadurch gekennzeichnet, dass** der Polarisationsfilter (10, 10', 10") ausserhalb der Empfangsachse (E) angeordnet ist.

4. Laserdistanzmesser nach einem der Ansprüche 1 bis 3, **dadurch gekennzeichnet, dass** der Polarisationsfilter (10, 10', 10") eine direkt an oder in einem Bauteil der Empfangsoptik (5) angeordnete Polarisationsschicht ist.

5. Laserdistanzmesser nach einem der Ansprüche 1 bis 4, **dadurch gekennzeichnet, dass** der Polarisationsfilter (10") direkt auf dem Photoempfänger (7) aufgebracht ist.

6. Laserdistanzmesser nach einem der Ansprüche 1 bis 5, **dadurch gekennzeichnet, dass** der Photoempfänger (7) eine Blende (12) aufweist.

7. Laserdistanzmesser nach Anspruch 1 oder 2, **dadurch gekennzeichnet, dass** der Polarisationsfilter (10"') innerhalb der Empfangsachse (E) zwischen der Empfangslinse (11) und dem Brennpunkt (6) angeordnet ist.

8. Laserdistanzmesser nach Anspruch 7, **dadurch gekennzeichnet, dass** der Polarisationsfilter (10"') ein Polarisationsstrahlteiler ist.
